# EUROPEAN PATENT SPECIFICATION

(11) **EP 1 590 611 B1**
(45) Date of publication and mention of the grant of the patent: **05.11.2008**
(21) Application number: 03781229.4
(22) Date of filing: 18.12.2003
(51) Int. Cl.: F25B 21/02, H02J 17/00

(54) **CONTAINER AND METHOD FOR COOLING**
KÜHLBEHÄLTER UND -VERFAHREN
RECIPIENT ET PROCEDE DE REFROIDISSEMENT

(30) Priority: 23.12.2002 SE 0203860
(43) Date of publication of application: 02.11.2005
(73) Proprietor: Pettersson, Jerry, 756 54 Uppsala (SE)
(72) Inventor: Pettersson, Jerry, 756 54 Uppsala (SE)
(74) Representative: Valea AB
(86) International application number: PCT/SE2003/002000
(87) International publication number: WO 2004/057247

(56) References cited:
- US-A- 4 685 047
- US-A- 5 994 871
- US-B1- 6 279 464

## Description

The present invention pertains to a container for cooling its interior via microwaves. The invention also pertains to a method of cooling contents in a container with microwave radiation by a microwave oven.

### Background art

Refrigerators and freezers are used both domestically and in the food industry for cooling and freezing food and beverages. Other areas where it is common practice to cool and freeze substances and samples are within healthcare, medical research and the processing industry. Compressors are widely used in the fridges and freezers of today to provide a cooling/freezing, which is effective but not very fast. Such fridges/freezers also rely on being constantly activated since a lowering of the temperature to desired levels at each time of practical utilization thereof would be time-consuming.

Picnic bags, cool boxes and cooling insulator cups with inherent electric cooling through battery connection or the electric mains are sometimes used for keeping food and drinks cold during warm weather, but are limited due to the low cooling effect achieved and are often only capable of keeping the temperature of their contents at a steady level. They are not really suited to cool or freeze their contents to temperatures much lower than a temperature it had before being put in the bag, box or cup.

These and other currently known solutions for cooling or freezing food, drinks and other substances have drawbacks with achieving a limited cooling effect and thus they all provide a cooling/freezing, which is relatively slow. Furthermore the prior art coolers/freezers are not suited for short-term temporary cooling or freezing due to the waste of energy involved with them being constantly activated for cooling/freezing and the start-up period from being turned off for the prior art coolers/freezers is just to long for it to be a possible option to frequently switch them on and off at need for cooling.

Document US-A-6 279 464 reveal the use of a Peltier device in a microwave oven for keeping the food cool or subjecting it to preliminary heating.

There is a need for a more effective and fast cooling/freezing of foods, beverages and other substances with a cooler also incorporating means for concurrently controlling and visualizing the temperature as it is decreasing in the cooled object and/or area in which it is being cooled. Means for manual activation and deactivation of such a cooler by a simple control knob, switch or button is thus desirable.

### Summary of the disclosed invention

The present invention relates to a container for cooling its interior via microwaves and to a method for cooling contents in a container by microwave radiation.

The container and method provide rapid, effective and controllable cooling of contents such as food, beverages and also other substances such as samples, specimens and objects processed and treated by cooling, for example for healthcare-, research-, laboratory- and industrial processing purposes.

To achieve aims and objectives the present invention provides a container for interior cooling by reception of microwave radiation. The container comprises a lid, at least one integrated electrical cooler, at least one integrated microwave receiving rectenna, and at least one integrated microwave shield for shielding microwaves from reaching the interior of the container. Container incident microwaves are received and converted into direct-current voltage (DC) through the rectenna, which powers the electrical cooler for cooling the interior of the container.

One embodiment of the container according to the present invention comprises that the cooler is a peltier cooling element.

In another embodiment of the container according to the present invention, the rectenna comprises at least one microwave receiving antenna, a low pass filter, a rectifying diode, a DC filter and a load resistor.

In a further embodiment of the container according to the present invention, the microwave shield is a metal sheet or metal net with small apertures.

Another embodiment of the container according to the present invention comprises that the rectenna is a diode rectenna.

Yet a further embodiment of the container according to the present invention comprises that the antennas are dipole, patch or loop antennas or an array of such antennas.

Yet another embodiment of the container according to the present invention comprises that the rectenna and the microwave shield are integrated as separate layers in the walls of the container.

In a further embodiment of the container according to the present invention, a bottom wall-section comprises an outermost microwave-shield layer, a rectenna electric circuit layer and an innermost electric cooling layer.

In yet another embodiment of the container according to the present invention, a closed side wall-section comprises an outermost microwave-receiving rectenna layer, a microwave-shield layer and an innermost electric cooling layer.

In a yet further embodiment of the container according to the present invention, the lid comprises at least one of an outermost microwave receiving rectenna layer, a microwave-shield layer and an innermost cooling layer.

An additional embodiment of the container according to the present invention comprises that incident microwaves are received by the rectenna antennas in the lid- and side wall-sections and are converted into direct-current voltage (DC) through the electric circuitry of the rectenna, which is integrated in the bottom wall-section for powering the electrical coolers in the innermost bottom and side wall-sections of the container for cooling its interior through the innermost bottom and side wall-section surfaces.

Other embodiments of the container according to the present invention comprises that it is manufactured in aluminum, plastic or ceramic material or that it is manufactured in a microwave absorbing material.

Further embodiments of the container according to the present invention comprises that it has rounded forms and that the microwave radiation is provided by a microwave oven.

Additionally one embodiment of the container according to the present invention comprises that a thermometer is integrated in the container displaying a temperature of at least one of the container, cooler and a content provided therein.

The present invention further sets forth a method for cooling contents in a container by microwave radiation. The container comprises a lid, at least one integrated electrical cooler, at least one integrated microwave receiving rectenna, and at least one integrated microwave shield for shielding microwaves from reaching the interior of the container. The method comprises the steps of:
sealing the container through closing the container lid;
applying microwave radiation onto the outer surfaces of the container by utilizing a microwave oven; and
wherein container incident microwaves are received and converted into direct-current voltage (DC) through the rectenna, which powers the electrical cooler for cooling the interior of the container and its contents.

One embodiment of the method according to the present invention comprises that the cooling is accomplished by an integrated peltier cooling element.

In another embodiment of the method according to the present invention, the rectenna is arranged to comprise at least one microwave receiving antenna, a low pass filter, a rectifying diode, a DC filter and a load resistor.

In a further embodiment of the method according to the present invention, the microwave shield is arranged to comprise a metal sheet or metal net with small apertures.

Another embodiment of the method according to the present invention comprises that the rectenna is arranged to comprise a diode rectenna.

Yet a further embodiment of the method according to the present invention comprises that the antennas are arranged to comprise dipole, patch or loop antennas or an array of such antennas.

Yet another embodiment of the method according to the present invention comprises that the electrical cooler, the rectenna and the microwave shield are arranged to be integrated as separate layers in the walls of the container.

In a further embodiment of a method according to the present invention, a bottom wall-section of the container is arranged to comprise an outermost microwave-shield layer, a rectenna electric circuit layer and an innermost electric cooling layer.

In yet another embodiment of a method according to the present invention, a closed side wall-section of the container is arranged to comprise an outermost microwave-receiving rectenna layer, a microwave-shield layer and an innermost electric cooling layer.

In a yet further embodiment of the method according to the present invention, the lid of the container is arranged to comprise at least one of an outermost microwave receiving rectenna layer, a microwave-shield layer and an innermost cooling layer.

An additional embodiment of the method according to the present invention comprises that incident microwaves are received by the rectenna antennas in the lid- and side wall-sections and are converted into direct-current voltage (DC) through the electric circuitry of the rectenna, arranged in the bottom wall-section, for powering the electrical coolers in the innermost bottom and side wall-sections of the container thus cooling the interior of the container through the innermost bottom and side wall-section surfaces.

Other embodiments of the method according to the present invention comprises that the container is manufactured in aluminum, plastic or ceramic material or that the container is manufactured in a microwave absorbing material.

Further embodiments of the method according to the present invention comprises that the container is manufactured with rounded forms and that wherein the microwave radiation is provided by a user activating the microwave oven.

Additionally one embodiment of the method according to the present invention comprises that a thermometer, integrated in the container, displays a temperature reading of at least one of the container, coolers and the content provided therein.

### Brief description of the drawings

Henceforth reference is had to the attached figures for a better understanding of the present invention and its examples and embodiments, wherein the:
**Fig. 1** schematically illustrates a container 10 with a rectenna 50 for interior cooling by microwave radiation, according to one embodiment of the present invention;
**Fig. 2** in a block diagram schematically illustrates a rectenna for receiving and converting microwave radiation into direct current for powering cooling elements in a container, according to one embodiment of the present invention; and
**Fig. 3** schematically illustrates a circuit diagram of a rectenna used in a container for cooling its interior via thereby powered cooling elements, according to one embodiment of the present invention.

### Detailed description of preferred embodiments

The present invention sets forth a container, which is specially adapted for interior cooling by reception of microwave radiation and to a method for cooling contents in such a container by utilizing microwave radiation generated in a microwave oven.

High power is needed for accomplishing an effective and fast cooling of substances such as food, beverages and the like, which means that a powerful source of power is needed. Such power sources are both relatively bulky and expensive and the level of power generated sets forth requirements on safety regulations where humans and animals are protected during their operation.

Microwave ovens are high power generators used for warming/heating substances, preferably food and beverages, and are currently found in many homes and places of work. The present invention according to one embodiment thereof utilizes the high power generated in a microwave oven for cooling substances by providing a container specially adapted for this purpose, which receives and utilizes the microwaves for cooling contents provided therein.

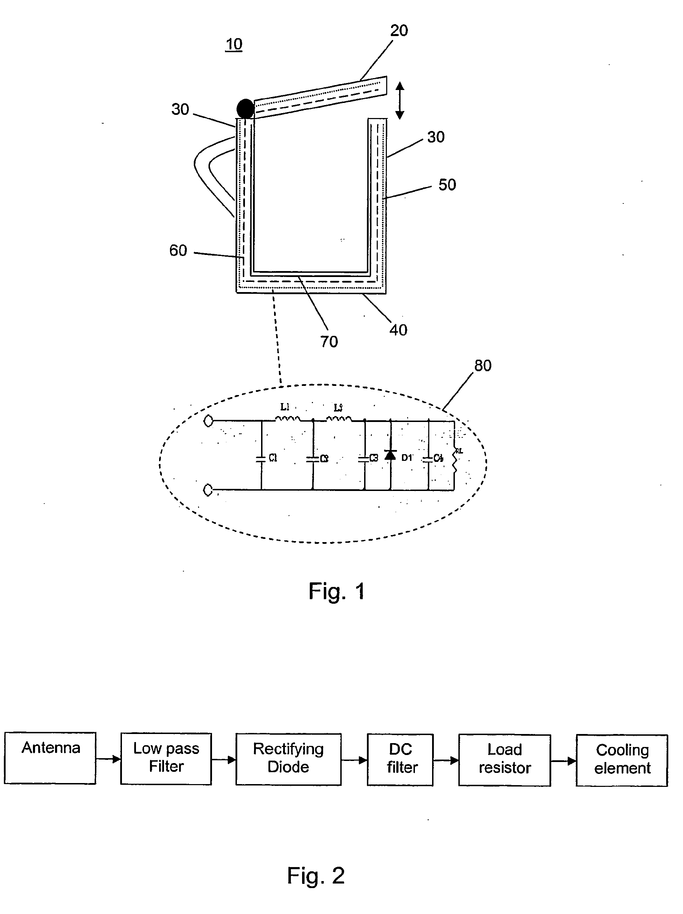

In fig. 1, a container 10 provided with a rectenna layer 50 for interior cooling by microwave radiation is schematically illustrated according to one embodiment of the present invention. Microwaves have a warming/heating effect on the water contained in substances being exposed to them. It is thus important to protect/shield a substance or content provided in the container 10 for cooling purposes from these heating rays and a container lid 20 is therefore arranged on top of the container for microwave shielding purposes. The container 10 is provided the rectenna 50 integrated as an outermost layer in the top (lid), side and bottom walls 20, 30, 40 for receiving microwave-oven-generated microwaves.

The rectenna 50 comprises antennas for receiving the microwaves and electric circuitry 80 for converting the received microwaves into direct current.

A microwave shield 60 is integrated in the container walls 20, 30, 40 in a separated inner layer for shielding the interior of the container from the microwaves and their heating effect.

Alternatively, the rectenna antennas are integrated outermost in the container walls 20, 30, 40. The microwave shield 60 is integrated in an inner layer of the walls as heat protection for both the rectenna circuitry 80, which is integrated in a furthermore inner layer of the walls, and for the purpose of shielding the interior of the container.

An electric cooler or a plurality of such coolers 70 are integrated in an innermost layer of the container side and bottom walls 30, 40.

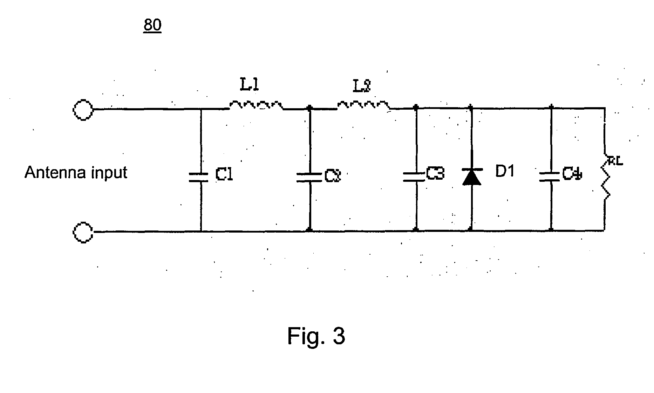

Container incident microwaves are received with the rectenna antennas and are converted to direct current via the rectenna circuitry 80 (shown in an exploded view in fig. 1 and in fig. 3) for powering the electric coolers 70. These coolers 70 thus through the inner side and bottom wall 30, 40 surfaces cool the interior of the container 10 and any contents provided therein.

Additionally, coolers can also be integrated in the top (lid) wall 20 for providing cooling through all the inner surfaces of the container walls 20, 30, 40.

The rectenna 50 can for example be a diode rectenna or other types of rectennas can alternatively be used.

The rectenna antennas are, according to one embodiment of the invention, dipole, patch or loop antennas or an array of such antennas.

The microwave shield is a metal sheet or metal net with small apertures for shielding microwaves from reaching the interior of the container 10 or it can be of any other microwave reflecting material.

The cooler 70, according to one embodiment of the invention, is a peltier cooling element. Alternatively, any other kind of electrically driven cooling element can be used to cool the interior of the container according to the present invention.

The container is, in one embodiment of the invention, manufactured in aluminum, plastic or ceramic material.

The container is, in another embodiment of the invention, manufactured in a microwave absorbing material.

The container, in a further embodiment of the invention, has rounded forms for avoiding electric arcs by microwave radiation in the microwave oven.

A thermometer or temperature measuring means is, in yet another embodiment of the invention, integrated in the container for displaying the temperature of contents provided therein for cooling. The thermometer can also be provided to display the temperature of the container 10 and/or coolers 70.

A timer means or thermostat provided to a microwave oven could, in yet a further embodiment of the invention, together with a content temperature measuring means, such as a thermometer, accomplish an automatic temperature control of the contents cooled in the container. For example, a blood sample can thus be preset for cooling down to an exact temperature and the microwave oven will then automatically be turned off when the sample reaches that temperature.

Contents for quick and effective cooling in the container 10 by microwaves could for example be beverages such as soft drinks or homemade ice cream, or water can for example be frozen to provide ice. The container 10 can also be utilized for fast and effective cooling/freezing of food and for cooling/freezing of other substances such as laboratory samples or the like.

The container according to the invention can be utilized for fast and controllable cooling and freezing of most substances and for most purposes. Only the human mind and imagination limit what can be cooled and freezed with the container and method according to the present invention.

In figs. 2 and 3, an example of a rectenna for use in the container 10 according to the present invention is schematically illustrated in a block diagram and a circuit diagram, respectively. The rectenna according to this example comprises an antenna for receiving microwaves, for example generated in a microwave oven. The received microwaves are filtered through a low pass filter, consisting of capacitors C1, C2, C3 and inductors L1, L2, for eliminating undesired ripple. Thereafter the microwaves pass through a rectifying diode D1, for example constituted of one or multiple schottsky-diodes, which generate a direct current. The thus generated direct current passes through a DC (direct current) block filter, which stabilizes the current. A load resistance RL is finally constituted of the coolers or cooling elements connected to the rectenna for being powered by the stabilized direct current for cooling purposes.

## Claims

1. A container (10) for interior cooling by reception of microwave radiation, comprising:
a lid (20);
at least one integrated electrical cooler (70);
at least one integrated microwave receiving rectenna (50); and
at least one integrated microwave shield (60) for shielding microwaves from reaching the interior of the container (10);
wherein container incident microwaves are received and converted into direct-current voltage through the rectenna (50), which powers the electrical cooler (70) for cooling the interior of the container (10).

2. A container according to claim 1, wherein the cooler (70) is a peltier cooling element.

3. A container according to claims 1-2, wherein the rectenna (50) comprises at least one microwave receiving antenna, a low pass filter, a rectifying diode, a DC filter and a load resistor.

4. A container according to claims 1-3, wherein the microwave shield (60) is a metal sheet or metal net with small apertures.

5. A container according to claims 1-4, wherein the rectenna (50) is a diode rectenna.

6. A container according to claims 3-5, wherein the antennas are dipole, patch or loop antennas or an array of such antennas.

7. A container according to claims 1-6, wherein the electrical cooler (70), the rectenna (50) and the microwave shield (60) are integrated as separate layers in the walls (20, 30, 40) of the container.

8. A container according to claim 7, wherein a bottom wall-section (40) comprises an outermost microwave-shield layer (60), a rectenna electric circuit layer and an innermost electric cooling layer (70).

9. A container according to claims 7-8, wherein a closed side wall-section (30) comprises an outermost microwave-receiving rectenna layer (50), a microwave-shield layer (60) and an innermost electric cooling layer (70).

10. A container according to claims 1-9, wherein the lid (20) comprises at least one of an outermost microwave receiving rectenna layer (50), a microwave-shield layer (60) and an innermost cooling layer (70).

11. A container according to claims 1-10, wherein incident microwaves are received by the rectenna antennas in the lid- and side wall-sections (20, 30) and are converted into direct-current voltage (DC) through the electric circuitry of the rectenna, which is integrated in the bottom wall-section (40) for powering the electrical coolers (70) in the innermost bottom and side wall-sections (30, 40) of the container for cooling its interior through the innermost bottom and side wall-section surfaces:

12. A container according to claims 1-11, wherein it is manufactured in aluminum, plastic or ceramic material.

13. A container according to claims 1-11, wherein it is manufactured in a microwave absorbing material.

14. A container according to claims 1-13, wherein it has rounded forms.

15. A container according to claims 1-14, wherein the microwave radiation is provided by a microwave oven.

16. A container according to claims 1-15, wherein a thermometer is integrated in the container displaying a temperature of at least one of the container (10), cooler (70) and a content provided therein.

17. Method for cooling contents in a container by microwave radiation, said container comprising a lid, at least one integrated electrical cooler, at least one integrated microwave receiving rectenna, and at least one integrated microwave shield for shielding microwaves from reaching the interior of the container, comprising the method steps of:
sealing the container through closing the container lid;
applying microwave radiation onto the outer surfaces of the container by utilizing a microwave oven; and
wherein container incident microwaves are received and converted into direct-current voltage (DC) through the rectenna, which powers the electrical cooler for cooling the interior of the container and its contents.

18. A method according to claim 17, wherein the cooling is accomplished by an integrated peltier cooling element.

19. A method according to claims 17-18, wherein the rectenna is arranged to comprise at least one microwave receiving antenna, a low pass filter, a rectifying diode, a DC filter and a load resistor.

20. A method according to claims 17-18, wherein the microwave shield is arranged to comprise a metal sheet or metal net with small apertures.

21. A method according to claims 17-19, wherein the rectenna is arranged to comprise a diode rectenna.

22. A method according to claims 19-21, wherein the antennas are arranged to comprise dipole, patch or loop antennas or an array of such antennas.

23. A method according to claims 17-22, wherein the electrical cooler, the rectenna and the microwave shield are arranged to be integrated as separate layers in the walls of the container.

24. A method according to claim 17-23, wherein a bottom wall-section of the container is arranged to comprise an outermost microwave-shield layer, a rectenna electric circuit layer and an innermost electric cooling layer.

25. A method according to claims 17-24, wherein a closed side wall-section of the container is arranged to comprise an outermost microwave-receiving rectenna layer, a microwave-shield layer and an innermost electric cooling layer.

26. A method according to claims 17-25, wherein the lid of the container is arranged to comprise at least one of an outermost microwave receiving rectenna layer, a microwave-shield layer and an innermost cooling layer.

27. A method according to claims 17-26, wherein incident microwaves are received by the rectenna antennas in the lid- and side wall-sections and are converted into direct-current voltage through the electric circuitry of the rectenna, arranged in the bottom wall-section, for powering the electrical coolers in the innermost bottom and side wall-sections of the container thus cooling the interior of the container through the innermost bottom and side wall-section surfaces.

28. A method according to claims 17-27, wherein the container is manufactured in aluminum, plastic or ceramic material.

29. A method according to claims 17-27, wherein the container is manufactured in a microwave absorbing material.

30. A method according to claims 17-29, wherein the container is manufactured with rounded forms.

31. A method according to claims 17-30, wherein the microwave radiation is provided by a user activation of the microwave oven.

32. A method according to claims 17-31, wherein a thermometer, integrated in the container, displays a temperature reading of at least one of the container, coolers and the content provided therein.

## Patentansprüche

1. Behälter (10) zum Innenraum-Kühlen durch Empfangen von Mikrowellenstrahlung, der aufweist:
eine Klappe (20);
zumindest einen integrierten elektrischen Kühler (70);
zumindest eine integrierte Mikrowellen-Empfangs-Gleichrichterantenne (50); und
zumindest eine integrierte Mikrowellen-Abschirmung (60) zum Abschirmen von Mikrowellen, den Innenraum des Behälters (10) zu erreichen;
wobei auf den Behälter auftreffende Mikrowellen empfangen werden und in Gleichspannungüber die Gleichrichterantenne (50) umgesetzt werden, welche den elektrischen Kühler (70) mit Leistung versorgt, um den Innenraum des Behälters (10) zu kühlen.

2. Behälter nach Anspruch 1, wobei der Kühler (70) ein Peltier-Kühlelement ist.

3. Behälter nach Anspruch 1-2, wobei die Gleichrichterantenne (50) zumindest eine Mikrowellen-Empfangsantenne, ein Tiefpassfilter, eine Gleichrichterdiode, ein DC-Filter und einen Lastwiderstand umfasst.

4. Behälter nach Anspruch 1-3, wobei die Mikrowellenabschirmung (60) eine Metallfolie oder ein Metallnetz mit kleinen Öffnungen ist.

5. Behälter nach Anspruch 1-4, wobei die Gleichrichterantenne (50) eine Diodenantenne ist.

6. Behälter nach Anspruch 3-5, wobei die Antennen Dipol-, Fleck- oder Schleifenantennen oder eine Gruppe dieser Antennen sind.

7. Behälter nach Anspruch 1-6, wobei der elektrische Kühler (70), die Gleichrichterantenne (50) und die Mikrowellenabschirmung (60) als separate Schichten in den Wänden (20, 30, 40) des Behälters integriert sind.

8. Behälter nach Anspruch 7, wobei ein Boden-Wand-Abschnitt (40) eine äußerste Mikrowellen-Abschirmungsschicht (60), eine elektrische Gleichrichterantennen-Schaltungsschicht und eine innerste elektrische Kühlschicht (70) umfasst.

9. Behälter nach Anspruch 7-8, wobei ein geschlossener Seitenwandabschnitt (30) eine äußerste Mikrowellen-Empfangs-GleichrichterAntennenschicht (50), eine Mikrowellen-Abschirmungsschicht (60) und eine innerste elektrische Kühlschicht (70) umfasst.

10. Behälter nach Anspruch 1-9, wobei die Klappe (20) zumindest eine äußerste Mikrowellen-Empfangs-Gleichrichterantennenschicht (50), eine Mikrowellen-Abschirmungsschicht (60) und eine innerste Kühlschicht (70) umfasst.

11. Behälter nach Anspruch 1-10, wobei einfallenden Mikrowellenüber die Gleichrichterantennen in den Klappen- und Seitenwandabschnitten (20, 30) empfangen werden und in Gleichspannung (DC)über die elektrische Schaltung der Gleichrichterantenne umgesetzt werden, welche im Boden-Wand-Abschnitt (50) integriert ist, um die elektrischen Kühler (70) in den innersten Boden- und den Seitenwandabschnitten (30, 40) des Behälters mit Leistung zu versorgen, um dessen Innenraumüber die innersten Boden- und Seitenwand-Abschnittsflächen zu kühlen.

12. Behälter nach Anspruch 1-11, wobei dieser aus Aluminium, Kunststoff oder Keramikmaterial hergestellt ist.

13. Behälter nach Anspruch 1-11, wobei dieser aus einem Mikrowellen-Absorptionsmaterial hergestellt ist.

14. Behälter nach Anspruch 1-13, wobei dieser abgerundete Formen hat.

15. Behälter nach Anspruch 1-14, wobei die Mikrowellenstrahlung durch einen Mikrowellen-Ofen bereitgestellt wird.

16. Behälter nach Anspruch 1-15, wobei ein Thermometer in den Behälter integriert ist, das eine Temperatur von zumindest einem von dem Behälter (10), dem Kühler (70) und einem Inhalt, der darin vorgesehen ist, anzeigt.

17. Verfahren zum Kühlen von Inhalten in einem Behälter durch Mikrowellenstrahlung, wobei der Behälter eine Klappe, zumindest einen integrierten elektrischen Kühler, zumindest eine integrierte Mikrowellen-Empfangs-Gleichrichterantenne und zumindest eine integrierte Mikrowellenabschirmung aufweist, um Mikrowellen davor abzuschirmen, den Innenraum des Behälters zu erreichen, wobei das Verfahren folgende Schritte umfasst:
Abdichten des Behälters durch Schließen der Behälterklappe;
Anlegen von Mikrowellenstrahlung auf die äußeren Flächen des Behälters unter Verwendung eines Mikrowellen-Ofens; und
wobei die auf den Behälter auftreffenden Mikrowellen empfangen werden und in Gleichspannung (DC)über die Gleichrichterantenne umgesetzt werden, welche den elektrischen Kühler mit Leistung versorgt, um den Innenraum des Behälters und dessen Inhalte zu kühlen.

18. Verfahren nach Anspruch 17, wobei das Kühlen durch ein integriertes Peltier-Kühlelement ausgeführt wird.

19. Verfahren nach Anspruch 17-18, wobei die Gleichrichterantenne eingerichtet ist, um zumindest eine Mikrowellen-Empfangsantenne, ein Tiefpassfilter, eine Gleichrichterdiode, ein DC-Filter und einen Lastwiderstand zu umfassen.

20. Verfahren nach Anspruch 17-18, wobei die Mikrowellenabschirmung eingerichtet ist, eine Metallfolie oder Metallnetz mit kleinen Öffnungen zu umfassen.

21. Verfahren nach Anspruch 17-19, wobei die Gleichrichterantenne eingerichtet ist, eine Diodengleichrichterantenne zu umfassen.

22. Verfahren nach Anspruch 19-21, wobei die Antennen eingerichtet sind, Dipol-, Fleck- oder Schleifenantennen oder eine Gruppe dieser Antennen zu umfassen.

23. Verfahren nach Anspruch 17-22, wobei der elektrische Kühler, die Gleichrichterantenne und die Mikrowellenabschirmung eingerichtet sind, als separate Schichten in den Wänden des Behälters integriert zu sein.

24. Verfahren nach Anspruch 17-23, wobei ein Boden-Wand-Abschnitt des Behälters eingerichtet ist, eine äußerste Mikrowellen-Abschirmungsschicht, eine elektrische Gleichrichterantennen-Schaltungsschicht und eine innerste elektrische Kühlschicht zu umfassen.

25. Verfahren nach Anspruch 17-24, wobei ein geschlossener Seitenwandabschnitt des Behälters eingerichtet ist, eine äußerste Mikrowellen-Empfangs-Gleichrichterschicht, eine Mikrowellen-Abschirmungsschicht und eine innerste elektrische Kühlschicht zu umfassen.

26. Verfahren nach Anspruch 17-25, wobei die Klappe des Behälters eingerichtet ist, zumindest eines von eineräußersten Mikrowellen-Empfangs-Gleichrichterschicht, einer Mikrowellen-Abschirmungsschicht und einer innersten Kühlschicht zu umfassen.

27. Verfahren nach Anspruch 17-26, wobei einfallende Mikrowellen durch die Gleichrichterantennen in den Klappen- und Seitenwandabschnitten empfangen werden und in Gleichspannungüber die elektrische Schaltung der Gleichrichterantenne umgesetzt werden, welche im Boden-Wand-Abschnitt angeordnet ist, um die elektrischen Kühler in den innersten Boden- und Seitenwand-Abschnitten des Behälters mit Leistung zu versorgen, um den Innenraum des Behälters über die innersten Boden-und Seitenwand-Abschnittflächen zu kühlen.

28. Verfahren nach Anspruch 17-27, wobei der Behälter aus Aluminium, Kunststoff oder Keramikmaterial hergestellt ist.

29. Verfahren nach Anspruch 17-27, wobei der Behälter aus einem Mikrowellen-Absorptionsmaterial hergestellt ist.

30. Verfahren nach Anspruch 17-29, wobei der Behälter mit abgerundeten Formen hergestellt ist.

31. Verfahren nach Anspruch 17-30, wobei die Mikrowellenstrahlung durch eine Benutzeraktivierung des Mikrowellen-Ofens bereitgestellt wird.

32. Verfahren nach Anspruch 17-31, wobei ein Thermometer, welches im Behälter integriert ist, eine Temperatur anzeigt, welches zumindest eines von dem Behälter, Kühler und dem Inhalt, der darin vorgesehen ist, abliest.

## Revendications

1. Récipient (10) pour refroidissement intérieur par réception d'un rayonnement hyperfréquence, comportant :
un couvercle (20) ;
au moins un refroidisseur électrique intégré (70) ;
au moins une antenne redresseuse de réception hyperfréquence intégrée (50) ; et
au moins un blindage hyperfréquence intégré (60) pour empêcher des micro-ondes d'atteindre l'intérieur du récipient (10) ;
dans lequel des micro-ondes tombant sur le récipient sont reçues et converties en une tension continue par l'intermédiaire de l'antenne redresseuse (50), qui alimente en énergie le refroidisseur électrique (70) pour refroidir l'intérieur du récipient (10).

2. Récipient selon la revendication 1, dans lequel le refroidisseur (70) est un élément de refroidissement à effet Peltier.

3. Récipient selon les revendications 1 et 2, dans lequel l'antenne redresseuse (50) comporte au moins une antenne de réception hyperfréquence, un filtre passe-bas, une diode redresseuse, un filtre à courant continu et une résistance de charge.

4. Récipient selon les revendications 1 à 3, dans lequel le blindage hyperfréquence (60) est une feuille métallique ou une toile métallique à petites ouvertures.

5. Récipient selon les revendications 1 à 4, dans lequel l'antenne redresseuse (50) est une antenne redresseuse à diodes.

6. Récipient selon les revendications 3 à 5, dans lequel les antennes sont des antennes à dipôles, à plaques ou à boucles ou bien un réseau de telles antennes.

7. Récipient selon les revendications 1 à 6, dans lequel le refroidisseur électrique (70), l'antenne redresseuse (50) et le blindage hyperfréquence (60) sont intégrés sous forme de couches séparées dans les parois (20, 30, 40) du récipient.

8. Récipient selon la revendication 7, dans lequel une section de paroi de fond (40) comporte une couche de blindage hyperfréquence (60) située le plus à l'extérieur, une couche de circuit électrique d'antenne redresseuse et une couche de refroidissement électrique (70) située le plus à l'intérieur.

9. Récipient selon les revendications 7 et 8, dans lequel une section de paroi de côté fermée (30) comprend une couche d'antenne redresseuse (50) de réception hyperfréquence située le plus à l'extérieur, une couche de blindage hyperfréquence (60) et une couche de refroidissement électrique (70) située le plus à l'intérieur.

10. Récipient selon les revendications 1 à 9, dans lequel le couvercle (20) comporte au moins une couche d'antenne redresseuse (50) de réception hyperfréquence située le plus à l'extérieur, une couche (60) de blindage hyperfréquence et une couche (70) de refroidissement située le plus à l'intérieur.

11. Récipient selon les revendications 1 à 10, dans lequel des micro-ondes incidentes sont reçues par les antennes redresseuses dans les sections de parois de couvercle et de côté (20, 30) et sont converties en une tension continue DC par l'intermédiaire du circuit électrique de l'antenne redresseuse, qui est intégrée dans la section de paroi de fond (40) pour alimenter en énergie les refroidisseurs électriques (70) se trouvant dans les sections de parois de fond et de côté (30, 40) situées le plus à l'intérieur du récipient pour refroidir l'intérieur de celui-ci à travers les surfaces des sections de parois de fond et de côté situées le plus à l'intérieur.

12. Récipient selon les revendications 1 à 11, lequel est fabriqué en aluminium, en matière plastique ou en matière céramique.

13. Récipient selon les revendications 1 à 11, lequel est fabriqué en une matière absorbant les micro-ondes.

14. Récipient selon les revendications 1 à 13, lequel a des formes arrondies.

15. Récipient selon les revendications 1 à 14, dans lequel le rayonnement hyperfréquence est produit par un four à micro-ondes.

16. Récipient selon les revendications 1 à 15, dans lequel un thermomètre est intégré dans le récipient, affichant une température d'au moins l'un du récipient (10), du refroidisseur (70) et d'un contenu s'y trouvant.

17. Procédé pour refroidir le contenu d'un récipient par rayonnement hyperfréquence, ledit récipient comportant un couvercle, au moins un refroidisseur électrique intégré, au moins une antenne de réception hyperfréquence intégrée et au moins un blindage hyperfréquence intégré pour empêcher des micro-ondes d'atteindre l'intérieur du récipient, comprenant les étapes de procédé qui consistent à :
fermer de façon étanche le récipient par la fermeture du couvercle du récipient ;
appliquer un rayonnement hyperfréquence sur les surfaces extérieures du récipient en utilisant un four à micro-ondes ; et
dans lequel des micro-ondes tombant sur le récipient sont reçues et converties en une tension continue DC par l'intermédiaire de l'antenne redresseuse, laquelle alimente en énergie le refroidisseur électrique pour refroidir l'intérieur du récipient et son contenu.

18. Procédé selon la revendication 17, dans lequel le refroidissement est réalisé par un élément intégré de refroidissement à effet Peltier.

19. Procédé selon les revendications 17 et 18, dans lequel l'antenne redresseuse est agencée de façon à comporter au moins une antenne de réception hyperfréquence, un filtre passe-bas, une diode redresseuse, un filtre à courant continu et une résistance de charge.

20. Procédé selon les revendications 17 et 18, dans lequel le blindage hyperfréquence est agencé de façon à comporter une feuille métallique ou une toile métallique à petites ouvertures.

21. Procédé selon les revendications 17 à 19, dans lequel l'antenne redresseuse est agencée de façon à comporter une antenne redresseuse à diodes.

22. Procédé selon les revendications 19 à 21, dans lequel les antennes sont agencées de façon à comprendre des antennes à dipôles, à plaques ou à boucles ou un réseau de telles antennes.

23. Procédé selon les revendications 17 à 22, dans lequel le refroidisseur électrique, l'antenne redresseuse et le blindage hyperfréquence sont agencés de façon à être intégrés sous forme de couches séparées dans les parois du récipient.

24. Procédé selon les revendications 17 à 23, dans lequel une section de paroi de fond du récipient est agencée de façon à comporter une couche de blindage hyperfréquence située le plus à l'extérieur, une couche de circuit électrique d'antenne redresseuse et une couche de refroidissement électrique située le plus à l'intérieur.

25. Procédé selon les revendications 17 à 24, dans lequel une section de paroi de côté fermée du récipient est agencée de façon à comporter une couche d'antenne redresseuse de réception hyperfréquence située le plus à l'extérieur, une couche de blindage hyperfréquence et une couche de refroidissement électrique située le plus à l'intérieur.

26. Procédé selon les revendications 17 à 25, dans lequel le couvercle du récipient est agencé de façon à comporter au moins l'une d'une couche d'antenne redresseuse de réception hyperfréquence située le plus à l'extérieur, d'une couche de blindage hyperfréquence et d'une couche de refroidissement située le plus à l'intérieur.

27. Procédé selon les revendications 17 à 26, dans lequel des micro-ondes incidentes sont reçues par les antennes de l'antenne redresseuse dans les sections de couvercle et de paroi de côté et sont converties en une tension continue par le circuit électrique de l'antenne redresseuse, agencée dans la section de paroi de fond, pour fournir de l'énergie aux refroidisseurs électriques dans les sections de parois de fond et de côté situées le plus à l'intérieur du récipient, refroidissant ainsi l'intérieur du récipient à travers les surfaces des sections de parois de fond et de côté situées le plus à l'intérieur.

28. Procédé selon les revendications 17 à 27, dans lequel le récipient est fabriqué en aluminium, en matière plastique ou en matière céramique.

29. Procédé selon les revendications 17 à 27, dans lequel le récipient est fabriqué en une matière absorbant les micro-ondes.

30. Procédé selon les revendications 17 à 29, dans lequel le récipient est fabriqué de façon à avoir des formes arrondies.

31. Procédé selon les revendications 17 à 30, dans lequel le rayonnement hyperfréquence est produit par l'activation par un utilisateur du four à micro-ondes.

32. Procédé selon les revendications 17 à 31, dans lequel un thermomètre, intégré dans le récipient, affiche une valeur de lecture de température d'au moins l'un du récipient, des refroidisseurs et du contenu s'y trouvant.
